# EUROPEAN PATENT SPECIFICATION

(11) **EP 4 515 348 B1**
(45) Date of publication and mention of the grant of the patent: **07.10.2026**
(21) Application number: 23720794.9
(22) Date of filing: 17.04.2023
(51) Int. Cl.: G05D 1/00, G06Q 10/08

(54) **TRANSPORTATION DEVICE, COUPLING ASSEMBLY FOR AFFIXING ONTO A MOVABLE DEVICE, AND METHOD OF DRIVING A MOVABLE DEVICE**
TRANSPORTVORRICHTUNG, KUPPLUNGSANORDNUNG ZUR BEFESTIGUNG AUF EINER BEWEGLICHEN VORRICHTUNG UND VERFAHREN ZUM ANTRIEB EINER BEWEGLICHEN VORRICHTUNG
DISPOSITIF DE TRANSPORT, ENSEMBLE DE COUPLAGE POUR UNE FIXATION SUR UN DISPOSITIF MOBILE, ET PROCÉDÉ D'ENTRAÎNEMENT D'UN DISPOSITIF MOBILE

(30) Priority: 28.04.2022 IN 202241024895; 25.07.2022 GB 202210810
(43) Date of publication of application: 05.03.2025
(73) Proprietor: AUMOVIO Autonomous Mobility Germany GmbH, 85057 Ingolstadt (DE)
(72) Inventor: BEHANI, Sudhir, Bangalore 560099 (IN); KUMARI, Beena, Bangalore 560099 (IN); KHAN, Farha Anjum, Bangalore 560099 (IN)
(74) Representative: Aumovio Corporation
(86) International application number: PCT/EP2023/059870
(87) International publication number: WO 2023/208621

(56) References cited:
- DE-A1- 102015 110 555
- DE-A1- 102016 216 162
- US-A1- 2012 029 697

## Description

### TECHNICAL FIELD

Various embodiments relate to transportation devices, coupling assemblies for affixing onto a movable device, and methods of driving a movable device.

### BACKGROUND

Existing mobility devices designed for physically challenged persons are usually limited to indoor or short distance outdoor usage. For example, wheelchairs are generally suited for indoor usage, and limited outdoor usage. To travel outdoors, for example, to go to work or school, a physically challenged person may require assistance from others, to alight from the wheelchair and to board a vehicle such as a car or a bus. This hampers the independence of the physically challenged person.

While there are personal mobility devices (PMD) that may be used for travelling outdoors, PMDs may be challenging for a physically challenged person to steer and to control. An autonomous, i.e., self-driving PMD may possibly address the problem as it does not require manual driving by the physically challenged person. However, these autonomous PMDs are generally expensive.

In view of the above, there is a need for a new type of transportation device that can address at least some of the abovementioned problems.
US Patent Application US 2012/0029697 A1 discloses a robotic transportation device including a device body, two docking arms, and a controller module.
German Patent application DE 10 2016 216 162 A1 discloses a medical system comprising at least one mobile medical device and at least one towing vehicle.
German Patent application DE 10 2015 110 555 A1 discloses a robot system for transporting a hospital bed.

### SUMMARY

According to various embodiments, there is provided a transportation device including: a receiver configured to receive a coupling request including location information and device identity information; a mobility mechanism configured to drive the transportation device to a location indicated by the location information in the received coupling request; an authentication module configured to authenticate a movable device at the indicated location based on the device identity information in the received coupling request; and a coupler selectively engageable with the movable device based on the authentication, wherein on the selective engagement of the coupler with the movable device, movement of the transportation device correspondingly moves the movable device.

According to various embodiments, there is provided a **coupling assembly** for affixing onto a movable device, the coupling assembly including: a first attachment member affixable onto a movable device; and a second attachment member cooperative with the coupler of the transportation device to selectively engage the movable device to the transportation device.

According to various embodiments, there is provided a method of driving a movable device, the method including: receiving, in a server, a coupling request including location information and device identity information of the movable device; dispatching a designated transportation device to the movable device based on the location information in the coupling request; authenticating the movable device based on the identity information in the coupling request; operating the designated transportation device such that the designated transportation device couples itself to the movable device; and instructing the designated transportation device to drive off and thereby correspondingly moving the movable device.

Additional features for advantageous embodiments are provided in the dependent claims.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1 shows a simplified architecture diagram of a system for driving a movable device according to various embodiments.
FIGS. 2A and 2B show conceptual diagrams of transportation devices according to various embodiments.
FIGS. 3A and 3B show conceptual diagrams of coupling assemblies for affixing onto a movable device, according to various embodiments.
FIG. 4 shows a conceptual diagram of a coupling request, according to various embodiments.
FIG. 5 shows a flow diagram of a method of driving a movable device, according to various embodiments.
FIG. 6 shows a schematic diagram of a coupling assembly according to various embodiments.
FIGS. 7A and 7B show schematic flowcharts of a process of a transportation device coupling to a movable device, according to various embodiments.
FIGS. 8A to 8C show block diagrams of a kinematics controller, a mobility controller and an autonomous mobility stack of a transportation device respectively, according to various embodiments.
FIGS. 9A and 9B show flowcharts of a process of driving a movable device according to various embodiments.

### DESCRIPTION

The term "coupled" (or "connected") herein may be understood as electrically coupled or as mechanically coupled, for example attached or fixed, or just in contact without any fixation, and it will be understood that both direct coupling or indirect coupling (in other words: coupling without direct contact) may be provided.

In this context, any one of the transportation device and the coupling assembly as described in this description may include a memory which is for example used in the processing carried out in the device. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In order that the invention may be readily understood and put into practical effect, various embodiments will now be described by way of examples and not limitations, and with reference to the figures.

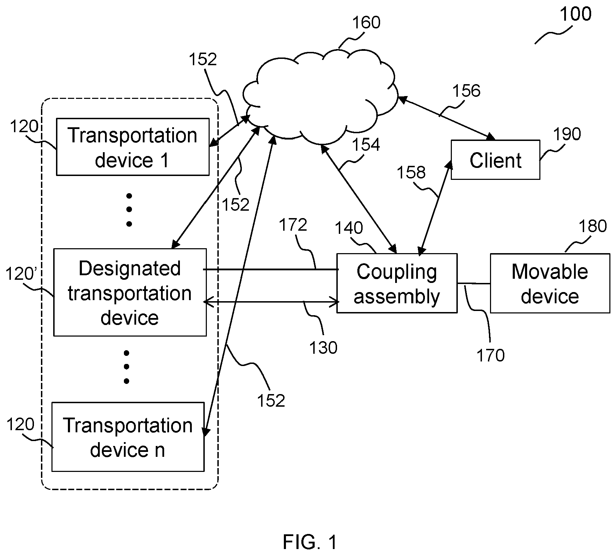

FIG. 1 shows a simplified architecture diagram of a system 100 for driving a movable device according to various embodiments. The system 100 may include at least one transportation device 120, a coupling assembly 140, a movable device 180, a server 160 and a client 190. The system 100 may provide autonomous capability to different types of movable devices 180 using a designated transportation device 120'. The designated transportation device 120 may be a transportation device 120 selected from the at least one transportation device 120.

The transportation device 120 may be a motorized self-driving device. The transportation device 120 may be capable of navigating in both indoor and outdoor environments. The transportation device 120 may be detachably coupleable to the movable device 180 via the coupling assembly 140. When attached to the movable device 180, the transportation device 120 may push or pull the movable device 180 from one place to another, along with its own movement. The transportation device 120 may be portable.

The movable device 180 may be any type of mobility device, for example, a manual device, a non-powered device, a semi-powered device, or a powered mobility device. The movable device 180 may be, for example, a wheelchair, a PMD, a hospital bed, a stretcher, a trolley, a vehicle, or a robot.

The coupling assembly 140 may be affixed onto any type of movable device 180 so that the movable device 180 becomes compatible with the transportation device 120. To this end, the coupling assembly 140 may include communication components so that the movable device 180 can communicate with the transportation device 120 via the coupling assembly 140. When in use, the coupling assembly 140 may have a mechanical coupling 170 with the movable device 180 and may further have a communication coupling 130 with the transportation device 120. When in use, the coupling assembly 140 may further have a mechanical coupling 172 with the transportation device 120. The coupling assembly 140 may also include securing means for securing to the transportation device 120, so that the transportation device 120 may attach to the movable device 180 via the coupling assembly 140.

A user of the system 100 may input his/her travelling requirements into the client 190. The client 190 may be a computer, or a mobile phone, that receives the user inputs through a software application, and then uploads the user inputs to the server 160. The client 180 may include a human machine interface (HMI) for the user to communicate with the system 100. The user may request for a transportation device 120, change or add destinations, authenticate, and pay the transportation fare through the HMI. The client 190 may include a user input device such as a touch screen, a keyboard, haptic interface, gaze detection interface, a chin-controlled interface, a mouth-control interface, a breath-control interface or a verbal-control interface depending on the user's need.

The server 160 may transmit instructions to at least one of the transportation device 120 and the coupling assembly 140. The server 160 may communicate with the transportation devices 120 through a first communication channel 152. The server 160 may communicate with the coupling assembly 140 through a second communication channel 154. The server 160 may communicate with the client 190 through a third communication channel 156. In addition, the user may use the client 190 to communicate directly with the coupling assembly 140 through a fourth communication channel 158. At least one of the first communication channel, the second communication channel, the third communication channel and the fourth communication channel may be hosted on an internet connection, or a wireless connection including for example, 4G/5G or other high bandwidth networks. The server 160 may communicate with the transportation device 120, the client 190 and the coupling assembly 140 through a gateway to enhance cybersecurity.

By using the transportation device 120 to drive the movable device 180, the system 100 can convert any movable device 180 to be an autonomous movable device using the same transportation device 120. This reduces the cost involved in developing multiple single-purpose autonomous movable devices.

Further, the transportation device 120 may be detached from one movable device 180, to be attached to another movable device 180. In other words, the transportation device 120 can be paired and unpaired with a plurality of different movable devices 180. This reduces the quantity of transportation devices 120 required to move a plurality of movable devices 180, since a single transportation device 120 can be shared amongst multiple movable devices 180 based on user demand.

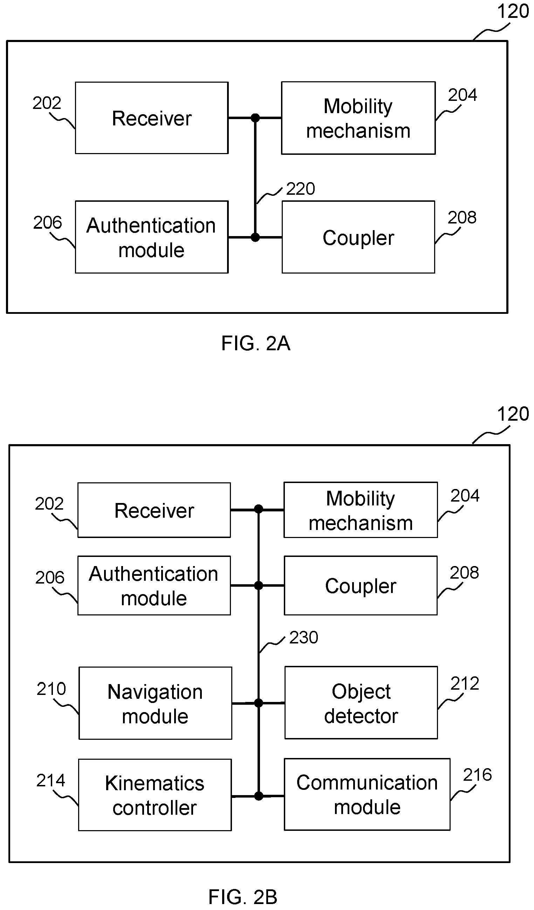

FIG. 2A shows a conceptual diagram of a transportation device 120 according to various embodiments. The transportation device 120 may include a receiver 202, a mobility mechanism 204, an authentication module 206 and a coupler 208. The receiver 202 may be configured to receive a coupling request comprising location information and device identity information. The mobility mechanism may be configured to drive the transportation device 120 to a location indicated by the location information in the received coupling request. The authentication module 206 may be configured to authenticate a movable device 180 at the indicated location based on the identity information in the received coupling request. The coupler 208 may be selectively engageable with the movable device 180 based on the authentication. On the selective engagement of the coupler 208 with the movable device 180, movement of the transportation device 120 may correspondingly move the movable device 180. The receiver 202, the mobility mechanism 204, the authentication module 206 and the coupler 208 may be coupled to one another, for example mechanically, electrically and/or communicatively, by coupling lines 220.

The transportation device 120 may equip a user's existing movable device 180 with autonomous driving capability. The user may thus be driven around without having to manually control the movable device 180. The transportation device 120 can be removably paired with more than type of movable device 180, so the user can use more than one movable device 180 with the transportation device 120. For example, the user can pair the transportation device 120 with a PMD to travel outdoors, and may pair the transportation device with a wheelchair to move around at home. A physically challenged user can travel independently both indoors and outdoors with the aid of the transportation device 120. The user can also share the usage of the transportation device 120 with other users, and therefore need not pay the full cost of owning the transportation device 120.

According to an embodiment which may be combined with the above-described embodiment or with any below described further embodiment, the authentication module 206 may be configured to authenticate the movable device 180 by reading an identification code provided on the movable device 180 and matching the read identification code to the identity information in the received coupling request. The authentication module 206 may ensure that the transportation device 120 is paired with the correct movable device 180 and to the correct user, so that the user can be safely transported to the correct destination.

According to an embodiment which may be combined with any above-described embodiment or with any below described further embodiment, the coupling request may further include destination information. The mobility mechanism 204 may be further configured to drive the transportation device 120 to a destination location indicated by the destination information, in response to the coupler 208 being engaged with the movable device 180. The transportation device 120 may thereby bring the user riding on the movable device 180, to his/her requested destination.

According to an embodiment which may be combined with any above-described embodiment or with any below described further embodiment, the coupler 208 may be further configured to disengage from the movable device 180 in response to the transportation device 120 having reached the destination location. The transportation device 120 may then take on a new assignment, or refuel itself after it is disengaged from the movable device 180.

According to an embodiment which may be combined with any above-described embodiment or with any below described further embodiment, the receiver 202 may be configured to receive the coupling request from a server 160. The server 160 may host a cloud-based resource management service, that optimizes allocation of transportation device 120 to the movable devices 180.

According to an embodiment which may be combined with any above-described embodiment or with any below described further embodiment, the coupler 208 may be selectively engageable with any one movable device 180 of a plurality of movable devices 180. Each movable device 180 of the plurality of movable devices 180 may have a unique identification code readable by the authentication module 206. This unique identification code may be stored in a coupling assembly affixed onto the movable device 180. This prevents the transportation device 120 from pairing with the wrong movable device 180.

According to an embodiment which may be combined with any above-described embodiment or with any below described further embodiment, the coupler 208 may be further selectively engageable with a further transportation device 120. This allows multiple transportation devices 120 to collectively cooperate for moving a movable device 180. This collective cooperation may generate larger driving force for moving movable devices 180 that are heavy, or unwieldy.

FIG. 2B shows a conceptual diagram of another transportation device 120 according to various embodiments. Compared to the transportation device 120 of FIG. 2A, the transportation device 120 of FIG. 2B may further include at least one of a navigation module 210, an object detector 212, a kinematics controller 214, and a communication module 216. The receiver 202, the mobility mechanism 204, the authentication module 206, the coupler 208 and at least one of the navigation module 210, the object detector 212, the kinematics controller 214, and the communication module 216 may be coupled to one another, for example mechanically, electrically and/or communicatively, by coupling lines 230.

According to an embodiment which may be combined with any above-described embodiment or with any below described further embodiment, the navigation module 210 may be configured to determine a travel route for the transportation device 120 to reach the indicated location.

According to an embodiment which may be combined with any above-described embodiment or with any below described further embodiment, the mobility mechanism 204 may be configured to drive the transportation device 120 to the indicated location in accordance with the determined travel route. With the navigation module 210 inside the transportation device 120, the transportation device 120 may adjust its travel route to avoid immediate obstacles detected through its sensors, without risk of communication delays.

According to an embodiment which may be combined with any above-described embodiment or with any below described further embodiment, the navigation module 210 may be configured to receive map data, and may be further configured to determine the travel route based on the map data. The navigation module 210 may be further configured to download further map data from a cloud-based server and may be further configured to update the map data based on the downloaded further map data. The further map data may include crowd-sourced information. The map data may be continuously updated so it is accurate. The crowd-sourced information may include topological, weather, and indoor crowd size etc. to improve the navigation path planning. The crowd-sourced information may include information on changes in the road infrastructure which may not be reflected in map data yet, traffic scenarios, road conditions, and unplanned events. These map data and crowd-sourced information may facilitate seamless transition between outdoor and indoor environments for the coupledtransportation device-movable device. The crowd-sourced information may be saved in the server 160 to support future navigation needs.

According to an embodiment which may be combined with any above-described embodiment or with any below described further embodiment, the navigation module 210 may be configured to receive sensor data, and may be further configured to determine the travel route based on the sensor data. The navigation module 210 may be configured to receive updated sensor data and may be further configured to adapt the travel route based on the updated sensor data. The sensor data may be provided in real-time. The sensor data may include output from the object detector 212. The sensor data may complement the map data, for the transportation device 120 to avoid collision with objects or obstacles that are not shown in the map data.

According to an embodiment which may be combined with any above-described embodiment or with any below described further embodiment, the object detector 212 may be configured to detect the movable device 180. The mobility mechanism 204 may be further configured to position the transportation device 120 adjacent to the detected movable device 180, for the coupler 208 to engage with the detected movable device 180. The detection by the object detector 212 may supplement the accuracy of the location provided in the coupling request, so that the transportation device 120 moves close enough to the movable device 180 for the engagement process.

According to an embodiment which may be combined with any above-described embodiment or with any below described further embodiment, the kinematics controller 214 may be configured to determine kinematic parameters of the transportation device 120.

According to an embodiment which may be combined with any above-described embodiment or with any below described further embodiment, the mobility mechanism 204 may be further configured to position the transportation device 120 adjacent to the authenticated movable device 180 based on the determined kinematic parameters of the transportation device 120. This may facilitate accurate alignment between the transportation device 120 and the movable device 180 for successful engagement.

According to an embodiment which may be combined with any above-described embodiment or with any below described further embodiment, the mobility mechanism 204 may be configured to drive the transportation device 120 to the indicated location based on the determined kinematic parameters of the transportation device 120. The mobility mechanism 204 may fine tune its mobility parameters, such as heading and speed, based on the kinematic parameters, in a feedback loop, for accurate steering.

According to an embodiment which may be combined with any above-described embodiment or with any below described further embodiment, the communication module 216 may be configured to communicate with at least one further transportation device 180. The communication module 216 may include the receiver 202.

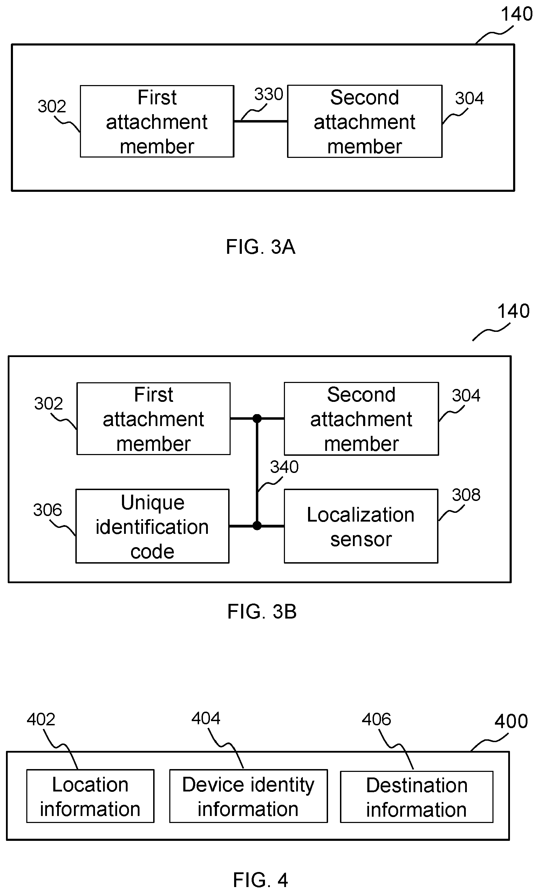

FIG. 3A shows a conceptual diagram of a coupling assembly 140 for affixing onto a movable device 180, according to various embodiments. The coupling assembly 140 may include a first attachment member 302 and a second attachment member 304. The first attachment member 302 may be affixable onto a movable device 180. The second attachment member 304 may be cooperative with the coupler 208 of a transportation device 120, to selectively engage the movable device 180 to the transportation device 120. The first attachment member 302 and the second attachment member 304 may be coupled to one another, for example mechanically, electrically and/or communicatively, by coupling lines 330. The coupling assembly 140 may serve as an adaptor that makes the movable device 180 couplable, i.e. engageable, with the transportation device 120.

According to an embodiment which may be combined with any above-described embodiment or with any below described further embodiment, the first attachment member 302 may be affixable onto a variety of movable devices 180 including PMD, vehicle, mobile bed, and wheelchair. This may provide the advantage of adapting any moveable device 180 to be couple able to the transportation device 120, so the same transportation device 120 may be reused with different types of movable devices 180 in different settings such as home, hospital, logistic warehouses etc.

FIG. 3B shows a conceptual diagram of a coupling assembly 140 according to various embodiments. Compared to the coupling assembly 140 of FIG. 3A, the coupling assembly 140 of FIG. 3B may further include at least one of a unique identification code 306 and a localization sensor 308. The first attachment member 302, the second attachment member 304 and at least one of the unique identification code 306 and the localization sensor 308 may be coupled to one another, for example mechanically, electrically and/or communicatively, by coupling lines 340.

According to an embodiment which may be combined with any above-described embodiment or with any below described further embodiment, the unique identification code 306 may be associated with a movable device profile stored in a server 160, wherein the movable device profile comprises information on at least one of shape, size, weight and type of the movable device 180. The transportation device 120 may adjust its alignment with the moveable device 180 based on the movable device profile. For example, the transportation device 120 may also determine whether it needs to work cooperatively with another transportation device 120 to transport a movable device 180 that exceeds a weight threshold.

According to an embodiment which may be combined with any above-described embodiment or with any below described further embodiment, the localization sensor 308 may be configured to determine at least one of location and kinematics information of the movable device 180. The coupling assembly 140 may upload the location and kinematics information to the server 160. The server 160 may select the transportation device 120 based on the location of the coupling assembly. The server 160 may relay the kinematics information to the transportation device 120 to facilitate the alignment of the transportation device 120 to the coupling assembly 140 for the engagement, or coupling process.

FIG. 4 shows a conceptual diagram of a coupling request 400, according to various embodiments. The coupling request 400 may be sent by the server 160 to the transportation device 120, over the first communication channel 152. The coupling request 400 may include at least one of location information 402, device identity information 404 and destination information 406. The location information 402 may indicate the location, i.e. position, of a movable device 180 that the transportation device 120 is requested to pair with. The device identity information 404 may indicate the device type of the movable device 180, for example whether it is a skate scooter, a wheelchair, a movable bed or a trolley. The device identity information 404 may indicate the unique identification code 306 of a particular coupling assembly 140 affixed to the movable device 180 that the transportation device 120 is requested to pair with. The transportation device 120 may identify the movable device 180 that it is requested to pair with, based on the device identity information 404. For example, the transportation device 120 may compare the device identity information 404 against the unique identification code 306 of the coupling assembly 140 affixed to the movable device. The destination information 406 may indicate the location, i.e. position that the transportation device 120 should bring the movable device 180 to.

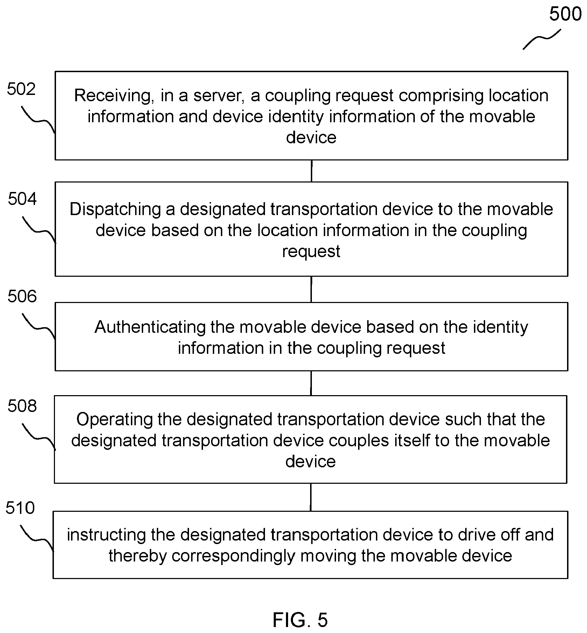

FIG. 5 shows a flow diagram of a method 500 of driving a movable device 180, according to various embodiments. The method 500 may include receiving, in a server 160, a coupling request comprising location information and device identity information of the movable device 180, in 502. The method 500 may further include dispatching a designated transportation device 120 to the movable device 180 based on the location information in the coupling request, in 504. The method 500 may further include authenticating the movable device 180 based on the identity information in the coupling request, in 506. The method 500 may further include operating the designated transportation device 120 such that the designated transportation device 120 couples itself to the movable device 180, in 508. The method 500 may further include instructing the designated transportation device 120 to drive off and thereby correspondingly moving the movable device 180, in 510.

According to an embodiment which may be combined with any above-described embodiment or with any below described further embodiment, the method 500 may further include selecting the designated transportation device 120' from a plurality of transportation devices 120, based on at least one of location information in the coupling request 400 and respective positions of each transportation device 120 of the plurality of transportation devices 120.

According to an embodiment which may be combined with any above-described embodiment or with any below described further embodiment, the method 500 may further include transmitting the coupling request 400 to the designated transportation device 120'.

According to an embodiment which may be combined with any above-described embodiment or with any below described further embodiment, authenticating the movable device 180 may include reading an identification code provided on the movable device 180 using the designated transportation device 120', uploading the identification code to the server 160, and matching the read identification code to the identity information in the coupling request.

According to an embodiment which may be combined with any above-described embodiment or with any below described further embodiment, the movable device 180 may be at least one of a medical device and a mobility device.

According to various embodiments, the transportation device 120 may include hardware and software. The hardware of the transportation device 120 may include a chassis, computer hardware components, synchronization devices, sensors, the mobility mechanism 204 and the coupler 208. The chassis may be an enclosure for all the other hardware of the transportation device 120. The computer hardware components may include a processor, and may further include at least one of a graphics processing unit (GPU), field-programmable gate array (FPGA), and application-specific integrated circuit (ASIC). The synchronization hardware may include the receiver 202. The synchronization hardware may include the communication module 216. The sensors may include exteroceptive sensors, such as radar or lidar sensors, as well as proprioceptive sensors, such as inertial measurement unit (IMU) or gyroscopes. The sensors may include the object detector 212. The hardware may further include a global positioning system (GPS) sensor. The mobility mechanism 204 may include a motor, and a plurality of wheels drivable by the motor. The coupler 208 may be removably attached to the coupling assembly 140.

According to various embodiments, software of the transportation device 120 may include at least one of navigation software, mobility software, coupling software, self-diagnosis software, and recharging software. The navigation software may be part of the navigation module 210. The navigation software may be configured to give instructions to the mobility mechanism 204, for driving the transportation device 120 in indoor and outdoor environments. The mobility software may be responsible for proper functioning of the transportation device 120, and communication with the server 160. The coupling software may be responsible for the process of coupling the transportation device 120 to the coupling assembly 140 attached to the movable device 180. The self-diagnosis software may be responsible to find any hardware failure. The self-diagnosis software may regularly scan the outputs of the various hardware and may generate a warning signal in case of a hardware failure. The recharging software may be configured to track energy consumption and remaining energy level of the transportation device 120. For example, the transportation device 120 may run on electricity, and may include a battery. The recharging software may monitor the battery charge level and may instruct the navigation software to bring the transportation device 120 to a charging station for charging the battery when the battery charge level falls below a threshold. In another example, the transportation device 120 may run on fuel and may include a fuel tank. The recharging software may monitor the fuel volume in the fuel tank and may instruct the navigation software to bring the transportation device 120 to a charging station for topping up the fuel when the fuel volume falls below a threshold.

According to various embodiments, the coupling assembly 140 may be removably attached to any side of the transportation device 120. The first attachment member 302 may attach to the transportation device 120 by at least one of mechanical, pneumatic, electrical or magnetic means. The second attachment member 304 may attach to any side of the movable device 180. The second attachment member 304 may fix the coupling assembly to the movable device 180. The coupling assembly 140 may include a localization sensor 308. The localization sensor 308 may be configured to estimate the position and orientation of the coupling assembly 140, with respect to a reference frame of inertia. The coupling assembly 140 may include a unique identification code 306, that may also be stored in the server 160. The unique identification code 306 may be mapped to a device profile of the movable device 180 that the coupling assembly 140 is affixed to. The device profile may include specifications of the movable device, including for example, shape, size, weight, and type of the movable device 180. The unique identification code 306 is also referred herein as "ID".

According to various embodiments, the coupling assembly 140 may include a transceiver. The transceiver may be capable of bidirectional communication with the server 160, the transportation device 120 and the client 190. The coupling assembly 140 may communicate with the transportation device 120 directly or using the server 160 as a relay.

According to various embodiments, the coupling assembly 180 may be mounted at a fixed position on the movable device 180. The fixed position may depend on the type of movable device 180. The coupling assembly 140 may be a one-time attachment to the movable device 180. In other words, the coupling assembly 180 may be permanently attached to the movable device 180. The coupling assembly 180 may also be referred herein as being part of the movable device 180.

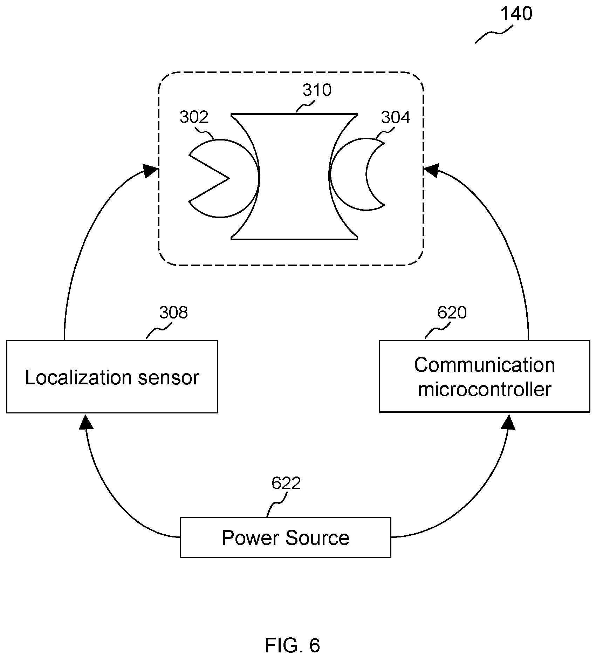

FIG. 6 shows a schematic diagram of the coupling assembly 140 according to various embodiments. The coupling assembly 140 may include the first attachment member 302, the second attachment member 304, and may further include a body 310 coupled to each of the first attachment member 302 and the second attachment member 304. The first attachment member 302 may be a mechanical part for attaching to the transportation device 120. The second attachment member 304 may be a mechanical part for attaching to the movable device 180. The body 310 may also enclose the internal components of the coupling assembly 140, including the localization sensor 308. The localization sensor 308 may be fixed inside the body 310, to determine kinematics, location and orientation measurements of the coupling assembly 140. The body 310 may also house a communication microcontroller 620 and a power source 622. The communication microcontroller 620 may be configured to control transmitting and receiving of communication signals between the coupling assembly 140 and at least one of the server 160, the transportation device 120 and the client 190. The localization sensor 308 and the communication microcontroller 620 may draw power from the power source 622. It should be understood that the shape of the first attachment member 302 and the second attachment member 304 are not limited to that shown in the figure.

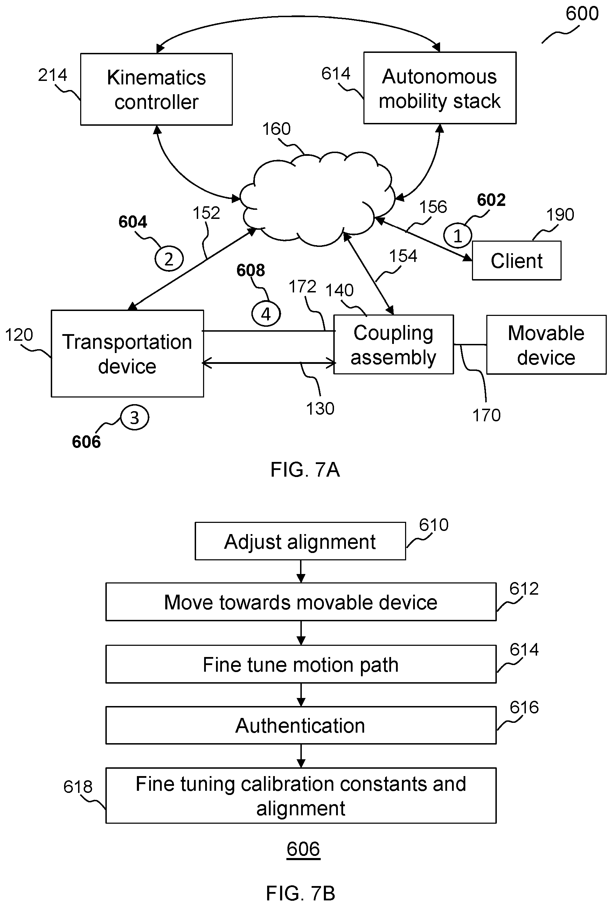

FIGS. 7A and 7B show schematic flowcharts of the process of a transportation device 120 coupling to a movable device 180, according to various embodiments. Referring to FIG. 7A, in 602, a user may request for a transportation device 120, by sending a message to the server 160 using a client 190. Each request may include a distinctive ID, a "request ID", which may be assigned to the user's request. In 604, the server 160 may select a transportation device 120 from a plurality of transportation devices 120, and transmit a coupling request to the selected transportation device 120. The selected transportation device 120 may perform a series of adjustments and authentication, in 606.

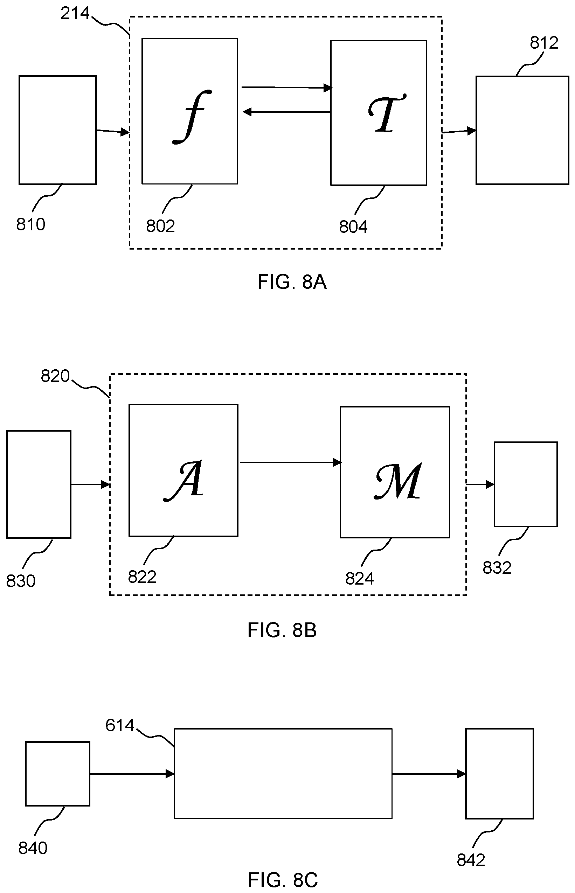

Referring to FIG. 7B, the process 606 may include adjusting the height and orientation of the transportation device 120 based on the device type of the movable device 180, in 610. The adjustment may align the transportation device 120 with the coupling assembly 140 affixed on the movable device 180. In 612, the transportation device 120 may move towards the movable device 180. In 614, the transportation device 120 may fine tune its kinematic variables, trajectories and determine an optimal path, based on outputs of its autonomous mobility stack 614 and its kinematics controller 214 in a feedback loop. The autonomous mobility stack 614 may be configured to provide software capability for vision and perception functions, including for example, object detection, object tracking and object trajectory prediction. The autonomous mobility stack 614 may be part of at least one of the transportation device 120 and the server 160. The autonomous mobility stack 614 and kinematics controller 214 will be described further with respect to FIGS. 8A and 8C. In 616, the transportation device 120 may verify the unique ID of the coupling assembly 140, to authenticate the movable device 180. When the transportation device 120 has reached and aligned with the movable device 180, the authentication module 206 may initiate a handshake with the movable device 180. This handshake may allow the authentication module 206 to read the unique identification code 306 of the coupling assembly 140 and verify it against the coupling request. The authentication module 206 may read the unique identification code 306 in various ways. For another example, the authentication module 206 may read the unique identification code 306 by receiving signal from the coupling assembly 140, wirelessly, for example by near-field communication. In another example, the authentication module 206 may read the unique identification code 306 using a camera or other sensors. In another example, the user may manually enter the unique identification code 306 into a user interface of the transportation device 120. On successful verification of the unique identification code 306, the transportation device 120 may send its unique device ID to the client 190 through the server 160. On receiving the correct unique device ID of the transportation device 120, the user may send an acceptance signal to allow the transportation device 120 to couple to the movable device 180. In 618, the transportation device 120 may fine tune its calibration constants and alignment based on outputs of its autonomous mobility stack 614 and its kinematics controller 214 in a feedback loop.

Referring back to FIG. 7A, in 608, the coupler 208 of the transportation device 120 may be operated to attach to the coupling assembly 140, such that transportation device 120 may be coupled to the movable device 180. On successful attachment with the transportation device 120, the transportation device 120 and the movable device 180 may travel like a single combined body.

According to various embodiments, the transportation device 120 attached to a movable device 180 may travel towards a destination. The transportation device 120 may receive the destination information from the server 160. The route for travelling to the destination may be generated either by the transportation device 120, or by the server 160. The transportation device 120 may fine tune its kinematic variables, trajectory and the route, in real-time based on its sensors' measurements provided to its motion controller in a feedback loop. The motion controller may be configured to control the mobility mechanism. The mobility mechanism of the transportation device 120 may drive the transportation device 120 according to the route.

According to various embodiments, upon reaching a destination, the transportation device 120 may either (a) detach from the movable device 180, (b) wait together with the movable device 180, (c) wait without the movable device 180, or (d) proceed to another destination, depending on instructions received from the server 160.

If the transportation device 120 receives instruction to perform (a), the coupler 208 of the transportation device 120 may detach itself from the coupling assembly 140, so that the movable device 180 is now uncoupled from the transportation device 120. The server 160 may compute a fee for the transportation service, and may deduct the fee from the user's electronic wallet, or request for payment from the user. After that, the transportation device 120 may report to a service centre for maintenance works, a charging station for recharging, or a parking lot to await its next task. If the transportation device 120 receives instructions to perform (b), the coupler 208 may remain engaged with the coupling assembly 140 while waiting for further instructions from the server 160. If the transportation device 120 receives instructions to perform (c), the coupler 208 may detach from the coupling assembly 140, and then wait for further instructions from the server 160. If the transportation device 120 receives instructions to perform (d), the navigation module 210 may generate a new route or trajectory, and the mobility mechanism 204 may bring the transportation device 120 and the movable device 180 to the new destination based on the new route.

FIGS. 8A to 8C show block diagrams of the kinematics controller 214, the mobility controller 820 and the autonomous mobility stack 614 of a transportation device 120 respectively, according to various embodiments.

Referring to FIG. 8A, the mathematical model of the kinematics controller 214 may include a kinematic model function 802 and a transfer function 804. The kinematics controller 214 may receive a first set of inputs 810, and may generate a first set of outputs 812 based on the first set of inputs 810. The first set of inputs 810 may include, at least one of (1) input kinematic variables of a movable device 180, (2) physical measurements of the movable device 180 such as height, weight, shape, and size, (3) types, size, and number of wheels of the movable device 180, (4) types of motion that the movable device 180 is capable of, for example, the degree of rotation, (5) direction and height of the coupling assembly 140, and (6) input kinematic variables of the coupled transportation device-movable device. The input kinematic variables of the movable device 180 may include variables required to define the motion model of the movable device 180.The input kinematic variables of the coupled transportation device-movable device may include variables required to define the motion model of the coupled transportation device-movable device. The kinematics model function 802 may output kinematic variables and trajectory of motion to the transfer function 804, based on the first set of inputs 810. The transfer function 804 may generate the first set of outputs 812 based on the kinematic variables and trajectory of motion received from the kinematics model function 802. The first set of outputs 812 may include at least one of (1) output kinematic variables of the transportation device 120, (2) trajectory of motion for the transportation device 120 to approach the movable device 180, (3) calibration constants for the transportation device 120 to align with the movable device depending on the type of the movable device 180 and the orientation of the coupling assembly 140, (4) output kinematic variables of the coupled transportation device-movable device, and (5) trajectory of motion for the coupled transportation device-movable device to approach the destination. When the movable device 180 is stationary and detached from the transportation device 120, the kinematic model function 802 may receive calibration constants from the transfer function 804.

Referring to FIG. 8B, the mobility controller 820 may include an actuator 822 and a mobility module 824. The mobility controller 820 may receive a second set of inputs 830 and may generate a second set of outputs 832 based on the second set of inputs 830. The second set of inputs 830 may include at least one of (1) control signal or safety signal and (2) source of energy. The actuator 822 may send information about mechanical motion to the mobility module 824. The mechanical information may include motion variables such as velocity, acceleration, angular parameters, etc. The mobility module 824 may be configured to control the mobility mechanism 204 based on the received mechanical information. The second set of outputs 832 may include mechanical motion of the mobility mechanism 204 that causes the transportation device 120 to follow an estimated trajectory.

Referring to FIG. 8C, the autonomous mobility stack 614 may receive a third set of inputs 840 and may generate a third set of outputs 842 based on the third set of inputs 840. The third set of inputs 840 may include at least one of (1) offline map, (2) kinematic variables, motion variables, trajectory of motion generated by the kinematics controller 214, and (3) real-time information. The real-time information may include crowd-sourced information such as indoor map, indoor navigation information, deviations in path, road blocks, dynamic changes in indoor environment, any live events, weather information, traffic information, etc. The third set of outputs 842 may include at least one of (1) real-time map, (2) estimated range and optimized path, and (3) change in acceleration and trajectory based on real time environment.

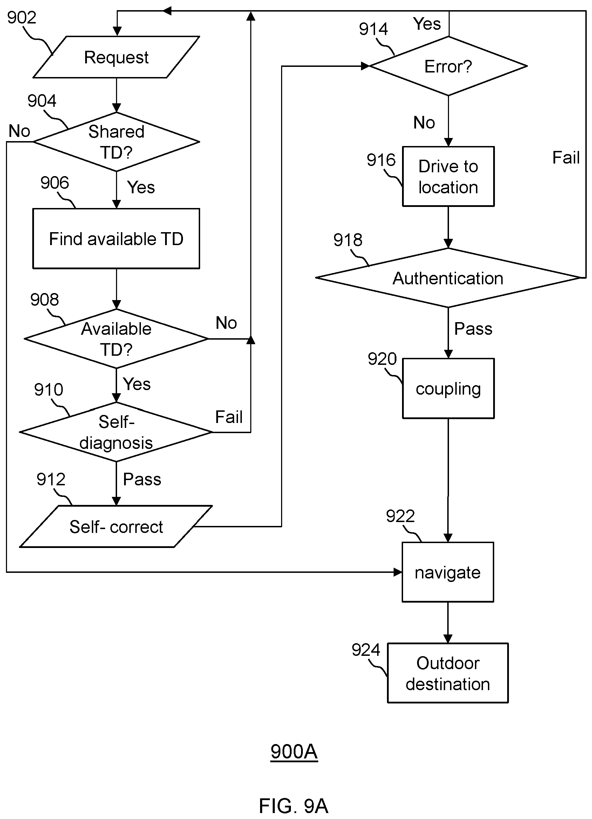

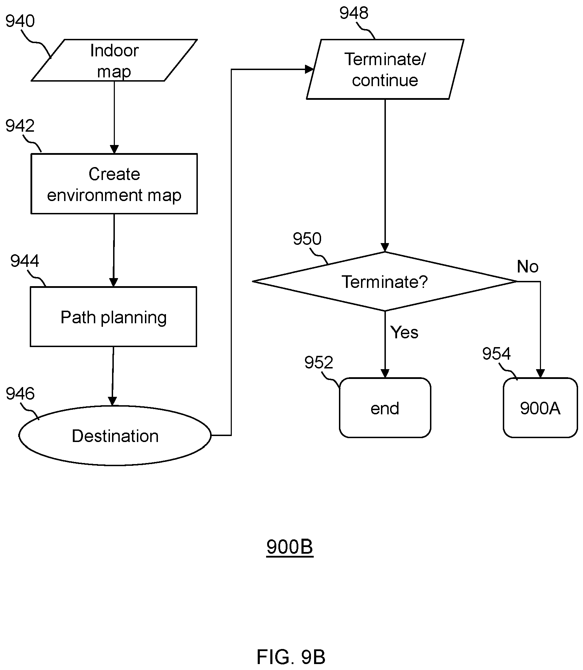

FIGS. 9A and 9B show flowcharts of a process of driving a movable device 180 according to various embodiments. The process may include a first stage 900A of driving the movable device 180 from a source location to an outdoor destination, and a second stage 900B of driving the movable device 180 from the outdoor destination to an indoor destination. FIG. 9A shows the process of stage 1 900A while FIG. 9B shows the process of stage 2 900B.

Referring to FIG. 9A, in 902, a user may submit a request for a transportation device 120 to go to a predetermined destination. In 904, a check is made to determine if the user is requesting to use a shared transportation device 120 or using his/her own device. If the user is using his/her own transportation device 120, the process may directly proceed to 922 for navigation. Otherwise, the process may proceed to 906, to search for an available transportation device 120. In 906, the request may be uploaded to a server 160 and the server 160 may search for an available transportation device 120. In 908, if a transportation device 120 (TD) is available, the process 900A may proceed to 910. If the transportation device 120 is not available, the process may return to 902, to inform the user to re-submit a request. In 910, the transportation device 120 may perform self-diagnosis and check the availability of its fuel/battery. If the transportation device 120 fails the self-diagnosis in 910, the process 900A returns to 902, to inform the user to re-submit a request. If the transportation device 120 passes the self-diagnosis in 910, the process 900A proceeds to 912, to take the required action for refueling or recharging or self-correcting the problems. In 914, if an un-resolvable problem exists, the process will return to 902, to inform the user to re-submit a request. If there is no unresolvable error, the transportation device 120 may proceed towards the location of the movable device 180, in 916. In 918, upon reaching the location of the movable device 180, the transportation device 120 may perform authentication of the movable device 180 based on the coupling assembly 140 on the movable device 180. If the authentication is successful, the transportation device 120 may couple with the coupling assembly 140, in 920. If the authentication is unsuccessful, the process 900A will return to 902, to inform the user to re-submit a request. In 922, the transportation device 120 may continuously process map data and sensor data to navigate and plan its path towards the destination. In 924, the transportation device 120 may arrive outside the destination, i.e. at an outdoor position of the destination.

Referring to FIG. 9B, in 940, the transportation device 120 may access indoor map data from the server 160. In 942, the transportation device 120 may create an environment map using sensor data and the indoor map data. In 944, the transportation device 120 may perform the path planning towards the indoor destination. In 946, the transportation device 120 may reach the indoor destination. In 948, the user may provide instructions to the server 160, as to whether to terminate operation of the transportation device 120 or to continue. In 950, if the user instructs to terminate, the process 900B may proceed to 952 to end. If the user instructs to continue, the process 900B may now proceed to the process 900A, to travel to another location.

According to various embodiments, the transportation device 120 may include interactivity sensors to monitor the proximity of other signal-generating devices. The interactivity sensors may include the object detector 212 and the communication module 216. The interactivity sensors may facilitate communication between a transportation device 120 and another transportation device 120, regardless of whether the transportation devices 120 are part of a coupled pair of transportation device-movable device or a standalone transportation device 120. Communication between the transportation devices 120 may take place directly or indirectly via cloud, for example using the server 160. Direct communication may take place via wireless, Bluetooth, 4G/5G, etc.

According to various embodiments, the transportation device 120 may include at least one environmental perception sensor, such as LiDAR, radar, proximity sensor and motion sensor. The at least one environmental sensor may be part of, or may include the object detector 212.

According to various embodiments, the transportation device 120 may include at least one location sensors, such as GPS, IMU, wheel odometers or encoders. The at least one location sensor may be part of the navigation module and/or part of the kinematics controller 214.

According to various embodiments, the transportation device 120 may include a camera. The camera may be part of the authentication module 206 for reading the unique ID of the coupling assembly 140. The camera may be one of the environmental perception sensors, for detecting objects.

According to various embodiments, the transportation device 120 is configured to drive autonomously. To this end, the navigation module 210 is configured to plan the trajectory of the transportation device 120 and adapt the trajectory in real-time. On receiving the coupling request from the server 160, the navigation module 210 may plan a path based on digital map data stored in the server 160. When the journey begins, environmental perception sensors of the transportation device 120 may continuously or at regular intervals, provide environmental sensing outputs to the navigation module 210. The environmental perception sensors may detect static objects such as traffic light, trees, lanes, as well as and dynamic objects such as vehicles and pedestrians, around the transportation device 120. Similarly, the location sensors of the transportation device 120 may continuously or at regular intervals, provide location information to the navigation module 210. The navigation module 210 may cooperate with the kinematics controller 214, based on the location information and environmental sensing outputs, to steer the transportation device 120 so as to avoid obstacles and collisions.

According to various embodiments, the navigation module 210 may employ visionbased navigation techniques, such as Simultaneous Localization and Mapping (SLAM), monocular depth estimation, object detection and tracking, gesture recognition, event detection, pose estimation, action recognition, event prediction and situation interpretation for obstacle detection and avoidance, and path planning. These algorithms may be implemented using computer vision approaches or deep learning-based methods.

According to various embodiments, the server 160 may be configured to provide cloud computing services, and may also be referred herein as a cloud server. The server 160 may be responsible for the following tasks: data storage, generating the coupling request, authentication and dynamic services. Generating the coupling request may include receiving a message from the client 190, processing the received message into a coupling request, and sending the coupling request to the transportation device 120. The authentication service may include storing the unique IDs of the coupling assemblies 140, requesting the unique IDs from the transportation devices 120, and matching the IDs. The dynamic services may include modifying the destination in real-time, adding destinations, and re-routing the path of the transportation device 120 based on real-time information such as locations of unexpected construction, accidents, or crowd-overflow.

The server 160 may also store the following information: digital map, unique IDs, transportation device information, coupling assembly information, controller data and destination information. The digital map data may include both indoor and outdoor maps. The digital map data may include three-dimensional maps or two-dimensional maps. The digital map data may be generated offline and uploaded into the server 160. Digital map may include data such as static map from destination, map extension including signs, boards, symbols etc., dynamic events such as announcements, crowd information, repair schedule etc. The digital map data may be updated in real-time based on crowd-sourced information, and downloaded data from a service provider.

Unique IDs may include identification codes of coupling assemblies 140, and may further include identification codes of transportation devices 120. Transportation device information may include characteristics, wheel characteristics, motion properties, and kinematics and location, of the transportation devices 120. The coupling assembly information may include characteristics, wheel characteristics, motion properties, kinematics and location, and orientation of the coupling assemblies 140. The controller data may include data of the kinematics controller, motion controller and sensor data. Destination information may include kinematics and location of the transportation device 120 and the operating hours at the destination.

According to various embodiments, the system 100 may provide transportation services. The system 100 may provide on-demand rental of the transportation devices 120. The system 100 may allow users to subscribe to the rental service. The system 100 may provide remote monitoring of the movable devices 180 that are attached to a respective transportation device 120. Alternatively, users may also choose to purchase their own transportation device 120 for transporting any movable device 180.

According to various embodiments, the server 160 may provide cloud-based services. The server 160 may be configured to remotely monitor a plurality of transportation devices 120 in real-time. The server 160 may be configured to evaluate, monitor and manage transportation devices 120, manage requests from users, estimate and update trajectories for the transportation devices 120, pricing. The server 160 may also be configured to monitor websites, virtual machine, database, virtual network and cloud storage, of the system 100. The server 160 may be configured to ensure data security, cyber security, speed, Application Programming Interface (API) performance, application workflow and allocating servers and storages.

According to various embodiments, the server 160 may provide dynamic services. The server 160 may process requests for change in destination and addition of successive destinations in real-time. When the server 160 receives requests to change the destination or to add successive destinations, the server may send these requests to the transportation device 120. The transportation device 120 may determine the power required to meet the new requests, and then accept or reject the request accordingly. The server 160 may also share crowd-sourced information with the transportation device 120. The server 160 may dynamically receive crowd-sourced information such as traffic condition, road condition and weather condition, and then transmit these information to at least one transportation device 120 for better navigation and path planning.

According to various embodiments, the system 100 may include a central resource management (CRM) software. The CRM software may provide a single view of the locations of transportation devices 120 and movable devices 180 (via their coupling assemblies 140). The CRM software may be configured to select transportation devices 120 to steer movable devices 180 from source to destination. The CRM software may optimize placement of the transportation devices 120 based on analyzing historical information on demand, schedule and locations where transportation service is required. The CRM software user interface may include a dashboard that presents information about the transportation devices 120 and movable devices 180. The dashboard may also show an indoor map view of the transportation device's path from source to destination.

In the following, an example of a practical application of the system 100 is described.

In the example, a user with a physical disability has a medical appointment at a hospital. The user's movable device 180 is a wheelchair. The user has purchased a coupling assembly 140 and has installed the coupling assembly 140 onto this wheelchair. The user's client 190 is his mobile phone. The user accesses the server 160's front end application or web interface using his mobile phone, to request for a transportation service that reaches the hospital in time for his medical appointment. The server 160 allocates a transportation device 120 to the user, based on a plurality of criteria. The criteria may include distance between transportation devices 120 and the user's location, and battery life or fuel availability of the transportation devices 120. The allocated transportation device 120, also referred herein as the designated transportation device 120', travels towards the user's location. The designated transportation device 120' receives kinematic variables, calibration constants for alignment, planned trajectory and offline map from either its own sensors or the server 160. The designated transportation device 120' updates and refines the trajectory based on sensor data and crowd-sourced information in real time. When designated transportation device 120' has reached the user's location, it performs an authentication check on the coupling assembly 140 of the movable device 180, to verify that the coupling request came from this user. The authentication check process may include consulting cloud services on the server 160 to confirm the user based on the request ID and coupling assembly 140's unique ID. On successful authentication, the transportation device 120 may realign and readjust to couple with the coupling assembly 140. The coupled transportation device 120 may pull or push the movable device 180 along as it navigates to the hospital. Upon reaching the hospital, the transportation device 120 may create an environment map using indoor map data and sensor data. The navigation module 210 may plan the indoor trajectory of the transportation device 120 based on the environment map and the indoor location of the destination. In the example, the user may need to enter a clinic inside the hospital and the transportation device 120 may bring the movable device 180 into the clinic. After the medical appointment, the user may place a new request with the server 160 to either use the same transportation device 120, or rent another transportation device 120, for bringing him home.

In the above example, real-time updates of the coupled transportation device-movable device may be uploaded to the server 160 and transmitted to a client 190 for real-time monitoring of the location of the user. The real-time journey information may be accessible to an authorized person, such as a next-of-kin of the user, as a safety measure.

According to various embodiments, the transportation device 120 may be used to tow any moving vehicle in airport, hospitals, on road etc.

According to various embodiments, the transportation device 120 may be used to tow any single user moving device or vehicle like hospital beds, stretchers etc. The movable device does not require reconfiguration for attaching to the transportation device 120.

According to various embodiments, multiple transportation devices 120 may be connected in a chain, and may move as a connected group.

According to various embodiments, the transportation device 120 may be coupled to multiple movable devices 180 that are connected in a chain. The transportation device 120 may drive the multiple movable devices 180 together.

## Claims

1. A coupling assembly (140) for affixing onto a movable device (180), the coupling assembly (140) comprising:
a first attachment member (302) affixable onto a movable device (180);
a second attachment member (304) cooperative with a coupler (208) of a transportation device (120) to selectively engage the movable device (180) to the transportation device (120);
and
a localization sensor (308) configured to determine at least one of location and kinematics information of the movable device (180);
the transportation device (120) comprising:
a receiver (202) configured to receive a coupling request (400) comprising location information (402) and device identity information (404);
a mobility mechanism (204) configured to drive the transportation device (120) to a location indicated by the location information (402) in the received coupling request (400);
an authentication module (206) configured to authenticate a movable device (180) at the indicated location based on the device identity information (404) in the received coupling request (400); and
the coupler (208) selectively engageable with the movable device (180) based on the authentication,
wherein on the selective engagement of the coupler (208) with the movable device (180), movement of the transportation device (120) correspondingly moves the movable device (180).

2. The coupling assembly (140) of claim 1, further comprising:
a unique identification code (306) associated with a movable device profile stored in a server (160), wherein the movable device profile comprises information on at least one of shape, size, weight, and type of the movable device (180).

3. The coupling assembly (140) of any one of claims 1 or 2, wherein the first attachment member (302) is affixable onto a variety of movable devices (180), wherein the variety of movable devices (180) comprises at least one of personal mobility device, vehicle, mobile bed, and wheelchair.

4. The coupling assembly (140) according to any one of the preceding claims, the transportation device (120) further comprising:
a navigation module (210) configured to determine a travel route for the transportation device (120) to reach the indicated location.

5. The coupling assembly (140) of claim 4, wherein the mobility mechanism (204) is configured to drive the transportation device (120) to the indicated location in accordance with the determined travel route.

6. The coupling assembly (140) of any one of claims 4 to 5,
wherein the navigation module (210) is configured to receive map data, and is further configured to determine the travel route based on the map data,
preferably wherein the navigation module (210) is further configured to download further map data from a cloud-based server and further configured to update the map data based on the downloaded further map data, wherein preferably the further map data is crowd-sourced information.

7. The coupling assembly (140) of any ones of claims 4 to 6,
wherein the navigation module (210) is configured to receive sensor data, and is further configured to determine the travel route based on the sensor data,
wherein preferably the navigation module (210) is configured to receive updated sensor data and further configured to adapt the travel route based on the updated sensor data, and
wherein preferably the sensor data is provided in real-time.

8. The coupling assembly (140) of any one of the preceding claims, wherein the authentication module is configured to authenticate the movable device (180) by reading an identification code provided on the movable device (180) and matching the read identification code to the device identity information in the received coupling request (400).

9. The coupling assembly (140) of any one of the preceding claims , wherein the coupling request (400) further comprises destination information, and wherein the mobility mechanism (204) is further configured to drive the transportation device (120) to a destination location indicated by the destination information, in response to the coupler (208) being engaged with the movable device (180),
preferably wherein the coupler (208) is configured to disengage from the movable device (180) in response to the transportation device (120) having reached the destination location.

10. The coupling assembly (140) of any one of the preceding claims, wherein the receiver (202) is configured to receive the coupling request (400) from a server (160); and/or
wherein the coupler (208) is further selectively engageable with a further transportation device (120); and/or
wherein the coupler (208) is selectively engageable with any one movable device (180) of a plurality of movable devices (180), wherein each movable device (180) of the plurality of movable devices (180) has a unique identification code readable by the authentication module (206).

11. The coupling assembly (140) of any one of the preceding claims, further comprising:
a communication module (216) configured to communicate with at least one further transportation device (120), wherein preferably the communication module (216) comprises the receiver (202); and/or
an object detector (212) configured to detect the movable device (180), wherein the mobility mechanism (204) is further configured to position the transportation device (120) adjacent to the detected movable device (180), for the coupler (208) to engage with the detected movable device (180); and/or
a kinematics controller (214) configured to determine kinematic parameters of the transportation device (120),
wherein preferably the mobility mechanism (204) is further configured to position the transportation device (120) adjacent to the authenticated movable device (180) based on the determined kinematic parameters of the transportation device (120),
preferably wherein the mobility mechanism (204) is configured to drive the transportation device (120) to the indicated location based on the determined kinematic parameters of the transportation device (120).

12. A method (500) of driving a movable device, the method (500) comprising:
affixing the coupling assembly of any one of the preceding claims to the movable device;
generating, in a server, a coupling request comprising location information and device identity information of the movable device (502);
dispatching a designated transportation device to the movable device based on the location information in the coupling request (504);
authenticating the movable device based on the device identity information in the coupling request (506);
operating the designated transportation device such that the designated transportation device couples itself to the movable device (508); and
instructing the designated transportation device to drive off and thereby correspondingly moving the movable device (510);

13. The method (500) of claim 12, further comprising:
selecting the designated transportation device from a plurality of transportation devices, based on at least one of location information in the coupling request and respective positions of each transportation device of the plurality of transportation devices; and/or
transmitting the coupling request to the designated transportation device.

14. The method (500) of any one of claims 12 to 13, wherein the authenticating the movable device comprises reading an identification code provided on the movable device using the designated transportation device, uploading the identification code to the server, and matching the read identification code to the device identity information in the coupling request.

## Patentansprüche

1. Kupplungsanordnung (140) zum Befestigen auf einer bewegbaren Vorrichtung (180), wobei die Kupplungsanordnung (140) Folgendes umfasst:
ein erstes Anbringungselement (302), das auf einer bewegbaren Vorrichtung (180) befestigbar ist;
ein zweites Anbringungselement (304), das mit einem Kupplungsstück (208) einer Transportvorrichtung (120) zusammenwirkt, um die bewegbare Vorrichtung (180) selektiv mit der Transportvorrichtung (120) in Eingriff zu bringen;
und
einen Lokalisierungssensor (308), der zum Bestimmen mindestens eines von Standort- und Kinematikinformationen der bewegbaren Vorrichtung (180) konfiguriert ist;
wobei die Transportvorrichtung (120) Folgendes umfasst:
einen Empfänger (202), der zum Empfangen einer Kupplungsanforderung (400), umfassend Standortinformationen (402) und Vorrichtungsidentitätsinformationen (404), konfiguriert ist;
einen Mobilitätsmechanismus (204), der zum Antreiben der Transportvorrichtung (120) zu einem Standort konfiguriert ist, der durch die Standortinformation (402) in der empfangenen Kupplungsanforderung (400) angegeben ist;
ein Authentifizierungsmodul (206), das zum Authentifizieren einer bewegbaren Vorrichtung (180) an dem angegebenen Standort basierend auf den Vorrichtungsidentitätsinformationen (404) in der empfangenen Kupplungsanforderung (400) konfiguriert ist; und
das Kupplungsstück (208), das basierend auf der Authentifizierung selektiv mit der bewegbaren Vorrichtung (180) in Eingriff bringbar ist,
wobei eine Bewegung der Transportvorrichtung (120) die bewegbare Vorrichtung (180) bei dem selektiven Ineingriffbringen des Kupplungsstücks (208) mit der bewegbaren Vorrichtung (180) entsprechend bewegt.

2. Kupplungsanordnung (140) nach Anspruch 1, ferner umfassend: einen eindeutigen Identifizierungscode (306), der einem in einem Server (160) gespeicherten Profil einer bewegbaren Vorrichtung zugeordnet ist, wobei das Profil einer bewegbaren Vorrichtung Informationen über mindestens eines von Form, Größe, Gewicht und Art der bewegbaren Vorrichtung (180) umfasst.

3. Kupplungsanordnung (140) nach einem der Ansprüche 1 oder 2, wobei das erste Anbringungselement (302) auf einer Vielfalt von bewegbaren Vorrichtungen (180) befestigbar ist, wobei die Vielfalt von bewegbaren Vorrichtungen (180) mindestens eines von einer persönlichen Mobilitätsvorrichtung, einem Fahrzeug, einem bewegbaren Bett und einem Rollstuhl umfasst.

4. Kupplungsanordnung (140) nach einem der vorhergehenden Ansprüche, wobei die Transportvorrichtung (120) ferner Folgendes umfasst:
ein Navigationsmodul (210), das zum Bestimmen eine Fahrtroute für die Transportvorrichtung (120) zum Erreichen des angegebenen Standorts konfiguriert ist.

5. Kupplungsanordnung (140) nach Anspruch 4, wobei der Mobilitätsmechanismus (204) zum Antreiben der Transportvorrichtung (120) zu dem angegebenen Standort in Übereinstimmung mit der bestimmten Fahrtroute konfiguriert ist.

6. Kupplungsanordnung (140) nach einem der Ansprüche 4 bis 5,
wobei das Navigationsmodul (210) zum Empfangen von Kartendaten konfiguriert ist und ferner zum Bestimmen der Fahrtroute basierend auf den Kartendaten konfiguriert ist,
wobei das Navigationsmodul (210) vorzugsweise ferner zum Herunterladen weiterer Kartendaten von einem Cloud-basierten Server konfiguriert ist und ferner zum Aktualisieren der Kartendaten basierend auf den heruntergeladenen weiteren Kartendaten konfiguriert ist, wobei es sich bei den weiteren Kartendaten vorzugsweise um Crowd-Source-Informationen handelt.

7. Kupplungsanordnung (140) nach einem der Ansprüche 4 bis 6,
wobei das Navigationsmodul (210) zum Empfangen von Sensordaten konfiguriert ist und ferner zum Bestimmen der Fahrtroute basierend auf den Sensordaten konfiguriert ist,
wobei das Navigationsmodul (210) vorzugsweise zum Empfangen von aktualisierten Sensordaten konfiguriert ist und ferner zum Anpassen der Fahrtroute basierend auf den aktualisierten Sensordaten konfiguriert ist und
wobei die Sensordaten vorzugsweise in Echtzeit bereitgestellt werden.

8. Kupplungsanordnung (140) nach einem der vorhergehenden Ansprüche, wobei das Authentifizierungsmodul zum Authentifizieren der bewegbaren Vorrichtung (180) durch Lesen eines auf der bewegbaren Vorrichtung (180) bereitgestellten Identifizierungscodes und Abgleichen des gelesenen Identifizierungscodes mit den Vorrichtungsidentitätsinformationen in der empfangenen Kupplungsanforderung (400) konfiguriert ist.

9. Kupplungsanordnung (140) nach einem der vorhergehenden Ansprüche, wobei die Kupplungsanforderung (400) ferner Zielinformationen umfasst und wobei der Mobilitätsmechanismus (204) ferner als Reaktion darauf, dass das Kupplungsstück (208) mit der bewegbaren Vorrichtung (180) in Eingriff gebracht ist, zum Antreiben der Transportvorrichtung (120) zu einem durch die Zielinformationen angegebenen Zielstandort konfiguriert ist,
wobei das Kupplungsstück (208) vorzugsweise zum Lösen von der bewegbaren Vorrichtung (180) als Reaktion darauf, dass die Transportvorrichtung (120) den Zielort erreicht hat, konfiguriert ist.

10. Kupplungsanordnung (140) nach einem der vorhergehenden Ansprüche, wobei der Empfänger (202) zum Empfangen der Kupplungsanforderung (400) von einem Server (160) konfiguriert ist; und/oder
wobei das Kupplungsstück (208) ferner selektiv mit einer weiteren Transportvorrichtung (120) in Eingriff bringbar ist; und/oder
wobei das Kupplungsstück (208) selektiv mit einer beliebigen bewegbaren Vorrichtung (180) einer Vielzahl von bewegbaren Vorrichtungen (180) in Eingriff bringbar ist, wobei jede bewegbare Vorrichtung (180) der Vielzahl von bewegbaren Vorrichtungen (180) einen eindeutigen Identifizierungscode aufweist, der durch das Authentifizierungsmodul (206) lesbar ist.

11. Kupplungsanordnung (140) nach einem der vorhergehenden Ansprüche, ferner Folgendes umfassend:
ein Kommunikationsmodul (216), das zum Kommunizieren mit mindestens einer weiteren Transportvorrichtung (120) konfiguriert ist, wobei das Kommunikationsmodul (216) vorzugsweise den Empfänger (202) umfasst;
und/oder
einen Objektdetektor (212), der zum Erfassen der bewegbaren Vorrichtung (180) konfiguriert ist, wobei der Mobilitätsmechanismus (204) ferner zum Positionieren der Transportvorrichtung (120) benachbart zu der erfassten bewegbaren Vorrichtung (180) konfiguriert ist, damit das Kupplungsstück (208) mit der erfassten bewegbaren Vorrichtung (180) in Eingriff gebracht wird; und/oder eine Kinematiksteuerung (214), die zum Bestimmen von kinematischen Parametern der Transportvorrichtung (120) konfiguriert ist,
wobei der Mobilitätsmechanismus (204) vorzugsweise ferner basierend auf den bestimmten kinematischen Parametern der Transportvorrichtung (120) zum Positionieren der Transportvorrichtung (120) benachbart zu der authentifizierten bewegbaren Vorrichtung (180) konfiguriert ist,
wobei der Mobilitätsmechanismus (204) vorzugsweise zum Antreiben der Transportvorrichtung (120) zu dem angegebenen Standort basierend auf den bestimmten kinematischen Parametern der Transportvorrichtung (120) konfiguriert ist.

12. Verfahren (500) zum Antreiben einer bewegbaren Vorrichtung, wobei das Verfahren (500) Folgendes umfasst:
Befestigen der Kupplungsanordnung nach einem der vorhergehenden Ansprüche an der bewegbaren Vorrichtung;
Erzeugen einer Kupplungsanforderung in einem Server, umfassend Standortinformationen und Vorrichtungsidentitätsinformationen der bewegbaren Vorrichtung (502);
Senden einer designierten Transportvorrichtung zu der bewegbaren Vorrichtung basierend auf den Standortinformationen in der Kupplungsanforderung (504);
Authentifizieren der bewegbaren Vorrichtung basierend auf den Vorrichtungsidentitätsinformationen in der Kupplungsanforderung (506);
Betreiben der designierten Transportvorrichtung derart, dass die designierte Transportvorrichtung sich selbst an die bewegbare Vorrichtung (508) kuppelt; und
Anweisen der designierten Transportvorrichtung, loszufahren und dadurch die bewegbare Vorrichtung (510) entsprechend zu bewegen.

13. Verfahren (500) nach Anspruch 12, ferner umfassend:
Auswählen der designierten Transportvorrichtung aus einer Vielzahl von Transportvorrichtungen basierend auf mindestens einem von Standortinformationen in der Kupplungsanforderung und jeweiligen Positionen jeder Transportvorrichtung der Vielzahl von Transportvorrichtungen; und/oder Übertragen der Kupplungsanforderung an die designierte Transportvorrichtung.

14. Verfahren (500) nach einem der Ansprüche 12 bis 13, wobei das Authentifizieren der bewegbaren Vorrichtung Lesen eines auf der bewegbaren Vorrichtung bereitgestellten Identifizierungscodes unter Verwendung der designierten Transportvorrichtung, Hochladen des Identifizierungscodes zu dem Server und Abgleichen des gelesenen Identifizierungscodes mit den Vorrichtungsidentitätsinformationen in der Kupplungsanforderung umfasst.

## Revendications

1. Ensemble de couplage (140) pour une fixation sur un dispositif mobile (180), l'ensemble de couplage (140) comprenant :
un premier élément de fixation (302) pouvant être fixé sur un dispositif mobile (180) ;
un second élément de fixation (304) coopérant avec un coupleur (208) d'un dispositif de transport (120) pour mettre sélectivement en prise le dispositif mobile (180) avec le dispositif de transport (120) ; et
un capteur de localisation (308) configuré pour déterminer des informations cinématiques et/ou d'emplacement du dispositif mobile (180) ;
le dispositif de transport (120) comprenant :
un récepteur (202) configuré pour recevoir une demande de couplage (400) comprenant des informations d'emplacement (402) et des informations d'identité de dispositif (404) ;
un mécanisme de mobilité (204) configuré pour entraîner le dispositif de transport (120) vers un emplacement indiqué par les informations d'emplacement (402) dans la demande de couplage reçue (400) ;
un module d'authentification (206) configuré pour authentifier un dispositif mobile (180) à l'emplacement indiqué sur la base des informations d'identité de dispositif (404) dans la demande de couplage reçue (400) ; et
le coupleur (208) pouvant venir sélectivement en prise avec le dispositif mobile (180) sur la base de l'authentification,
dans lequel, lors de la mise en prise de manière sélective du coupleur (208) avec le dispositif mobile (180), le déplacement du dispositif de transport (120) déplace de manière correspondante le dispositif mobile (180).

2. Ensemble de couplage (140) selon la revendication 1, comprenant en outre :
un code d'identification unique (306) associé à un profil de dispositif mobile stocké dans un serveur (160), dans lequel le profil de dispositif mobile comprend des informations sur au moins l'un parmi la forme, la taille, le poids et le type du dispositif mobile (180).

3. Ensemble de couplage (140) selon l'une quelconque des revendications 1 ou 2, dans lequel le premier élément de fixation (302) peut être fixé sur une diversité de dispositifs mobiles (180), dans lequel la diversité de dispositifs mobiles (180) comprend au moins l'un parmi un dispositif de mobilité personnelle, un véhicule, un lit mobile et un fauteuil roulant.

4. Ensemble de couplage (140) selon l'une quelconque des revendications précédentes, le dispositif de transport (120) comprenant en outre :
un module de navigation (210) configuré pour déterminer un itinéraire de déplacement pour que le dispositif de transport (120) atteigne l'emplacement indiqué.

5. Ensemble de couplage (140) selon la revendication 4, dans lequel le mécanisme de mobilité (204) est configuré pour entraîner le dispositif de transport (120) jusqu'à l'emplacement indiqué en fonction de l'itinéraire de déplacement déterminé.

6. Ensemble de couplage (140) selon l'une quelconque des revendications 4 à 5, dans lequel le module de navigation (210) est configuré pour recevoir des données cartographiques, et est en outre configuré pour déterminer l'itinéraire de déplacement sur la base des données cartographiques,
dans lequel, de préférence, le module de navigation (210) est en outre configuré pour télécharger d'autres données cartographiques à partir d'un serveur basé sur le nuage et en outre configuré pour mettre à jour les données cartographiques sur la base des autres données cartographiques téléchargées, dans lequel, de préférence, les autres données cartographiques sont des informations participatives.

7. Ensemble de couplage (140) selon l'une quelconque des revendications 4 à 6, dans lequel le module de navigation (210) est configuré pour recevoir des données de capteur, et est en outre configuré pour déterminer l'itinéraire de déplacement sur la base des données de capteur,
dans lequel, de préférence, le module de navigation (210) est configuré pour recevoir des données de capteur mises à jour et est en outre configuré pour adapter l'itinéraire de déplacement sur la base des données de capteur mises à jour, et
dans lequel, de préférence, les données de capteur sont fournies en temps réel.

8. Ensemble de couplage (140) selon l'une quelconque des revendications précédentes, dans lequel le module d'authentification est configuré pour authentifier le dispositif mobile (180) en lisant un code d'identification fourni sur le dispositif mobile (180) et en faisant correspondre le code d'identification lu avec les informations d'identité de dispositif dans la demande de couplage reçue (400).

9. Ensemble de couplage (140) selon l'une quelconque des revendications précédentes, dans lequel la demande de couplage (400) comprend en outre des informations de destination, et dans lequel le mécanisme de mobilité (204) est en outre configuré pour entraîner le dispositif de transport (120) vers un emplacement de destination indiqué par les informations de destination, en réponse à la mise en prise du coupleur (208) avec le dispositif mobile (180),
dans lequel, de préférence, le coupleur (208) est configuré pour se désolidariser du dispositif mobile (180) en réponse au fait que le dispositif de transport (120) a atteint l'emplacement de destination.

10. Ensemble de couplage (140) selon l'une quelconque des revendications précédentes, dans lequel le récepteur (202) est configuré pour recevoir la demande de couplage (400) en provenance d'un serveur (160) ; et/ou dans lequel le coupleur (208) peut en outre être sélectivement mis en prise avec un autre dispositif de transport (120) ; et/ou
dans lequel le coupleur (208) peut être sélectivement mis en prise avec un dispositif mobile quelconque (180) parmi une pluralité de dispositifs mobiles (180), dans lequel chaque dispositif mobile (180) parmi la pluralité de dispositifs mobiles (180) présente un code d'identification unique lisible par le module d'authentification (206).

11. Ensemble de couplage (140) selon l'une quelconque des revendications précédentes, comprenant en outre :
un module de communication (216) configuré pour communiquer avec au moins un autre dispositif de transport (120), dans lequel, de préférence, le module de communication (216) comprend le récepteur (202) ; et/ou
un détecteur d'objets (212) configuré pour détecter le dispositif mobile (180), dans lequel le mécanisme de mobilité (204) est en outre configuré pour positionner le dispositif de transport (120) de manière adjacente au dispositif mobile détecté (180), pour que le coupleur (208) vienne en prise avec le dispositif mobile détecté (180) ; et/ou
un contrôleur cinématique (214) configuré pour déterminer des paramètres cinématiques du dispositif de transport (120),
dans lequel, de préférence, le mécanisme de mobilité (204) est en outre configuré pour positionner le dispositif de transport (120) de manière adjacente au dispositif mobile authentifié (180) sur la base des paramètres cinématiques déterminés du dispositif de transport (120),
dans lequel, de préférence, le mécanisme de mobilité (204) est configuré pour entraîner le dispositif de transport (120) vers l'emplacement indiqué sur la base des paramètres cinématiques déterminés du dispositif de transport (120).

12. Procédé (500) d'entraînement d'un dispositif mobile, le procédé (500) comprenant :
la fixation au dispositif mobile de l'ensemble de couplage selon l'une quelconque des revendications précédentes ;
la génération, dans un serveur, d'une demande de couplage comprenant des informations d'emplacement et des informations d'identité de dispositif du dispositif mobile (502) ;
l'envoi d'un dispositif de transport désigné au dispositif mobile sur la base des informations d'emplacement dans la demande de couplage (504) ;
l'authentification du dispositif mobile sur la base des informations d'identité de dispositif dans la demande de couplage (506) ;
le fonctionnement du dispositif de transport désigné de sorte que le dispositif de transport désigné se couple au dispositif mobile (508) ; et
la commande au dispositif de transport désigné de s'éloigner et de déplacer ainsi de manière correspondante le dispositif mobile (510).

13. Procédé (500) selon la revendication 12, comprenant en outre :
la sélection du dispositif de transport désigné parmi une pluralité de dispositifs de transport, sur la base des informations d'emplacement dans la demande de couplage et/ou des positions respectives de chaque dispositif de transport parmi la pluralité de dispositifs de transport ; et/ou
la transmission de la demande de couplage au dispositif de transport désigné.

14. Procédé (500) selon l'une quelconque des revendications 12 à 13, dans lequel l'authentification du dispositif mobile comprend la lecture d'un code d'identification fourni sur le dispositif mobile à l'aide du dispositif de transport désigné, le téléchargement du code d'identification sur le serveur, et la mise en correspondance du code d'identification lu avec les informations d'identité de dispositif dans la demande de couplage.
